# EUROPEAN PATENT APPLICATION

(11) **EP 1 515 075 A2**
(43) Date of publication of application: **16.03.2005**
(21) Application number: 04255587.0
(22) Date of filing: 15.09.2004
(51) Int. Cl.: F16L 9/02, C10G 9/20, B21C 37/20

(54) **Composite tube for ethylene pyrolysis furnace and methods of manufacture and joining same**

(30) Priority: 15.09.2003 US 662722
(71) Applicant: Huntington Alloys Corporation, Huntington, WV 25705 (US)
(72) Inventor: Smith, Gaylord D., Huntington, WV 25705 (US); Baker, Brian Allen, Hitts Hill, OH 45645 (US); Fahrmann, Michael G., Huntington, WV 25705 (US); Harper, Mark Andrew, Huntington, WV 25705 (US)
(74) Representative: Hedley, Nicholas James Matthew

(57) **Abstract**

A process for making a composite tube uniquely suited for use in ethylene pyrolysis furnaces wherein the tube comprises an outer shell (32) made from a wrought or cast Fe-Ni-Cr heat resistant alloy and an inner core made from INCOLOY alloy MA956 powder. The outer shell (32) and powder core (34) are heated and simultaneously extruded to form a composite tube. The process is carried out at a temperature of preferably less than 1200°C and for a time so as to prevent recrystalization of the very fine grain structure in the alloy MA956. This un-recrystalized fine grain structure permits pilgering and/or cold drawing of the extruded composite tube to final size. The composite tube provided by the present invention is uniquely suited for use in the petrochemical and chemical process industries, so as to increase the efficiency and productivity of their respective processes. The thin core layer (34) of alloy MA956 provides high resistance to carburization and coke formation heretofore caused by the hydrocarbon feedstock flowing through the composite tube, while the outer shell (32) of Fe-Ni-Cr heat resistant alloy provides overall strength and rigidity to the tube. The use of the outer shell in the composite tube also solves the joining problem heretofore encountered in joining alloy MA956. A root pass or passes using an alloy MA956 filler metal followed by overlay welding passes using a filler metal compatible with the heat resistant alloy, such as INCONEL alloy 617 or FM 25/35, joins the outer shells of adjoining composite tubes and, thus, solves the welding problem.

## Description

### Field of the Invention

The present invention relates to a composite tube suitable for use in the petrochemical and chemical process industries and, more particularly, suited for use in an ethylene pyrolysis furnace. The outer shell of the composite tube is made from high temperature heat-resistant Fe-Ni-Cr alloy and an inner core of a mechanically alloyed powder which is highly resistant to carburization and coke formation, wherein the shell and core are simultaneously extruded and then cold worked by pilgering or drawing to finished diameter.

### Description of Related Art

The production of ethylene by steam cracking of alkanes, naphtha or vacuum gas oils, wherein the hydrocarbon feedstock passes within the inner bore of furnace tubing coils, presents a number of severe challenges to materials engineers. This is especially true in the radiant sections of conventional furnaces, where the range of optimal process parameters is often limited by creep strength, carburization resistance and the coking tendency of even the best currently available cast and wrought alloys.

Coke is a highly undesirable byproduct of the production of ethylene, propylene, butadiene and aromatics when using the usual feedstocks of ethane, propane, naphthas or vacuum gas oils. The coke collects on the inner walls of the pyrolysis coils of the furnace and to some extent exits the radiant section and deposits in the quench coolers or even passes through into the quench towers. As a direct consequence of this coke deposition, there is a drastic reduction in the heat transfer coefficients required for the pyrolysis, carburization of the furnace tubes beneath the coke deposit, and a throttling of throughput of the furnace tubes. This coke deposition results in the need to shut down production and decoke the radiant section and clean the quench coolers and towers. It is not uncommon with conventional alloys which appear to catalytically foster the decomposition of the feedstock to coke to require decoking as often as every 20 to 40 days.

Improved tubing designs and furnace configurations have been developed in recent years to extend times between decoking operations. However, there still remains a need to find a solution to provide a material that minimizes catalytic coke formation without sacrificing the other requirements of creep strength, carburization resistance, stability and field fabricability, particularly joinability.

Wrought INCOLOY® alloy MA956 tubing as currently produced clearly possesses the necessary corrosion resistance and capacity to retard catalytic coke formation. However, a dramatic difference between the longitudinal creep properties and the transverse or circumferential creep properties exists in INCOLOY® alloy MA956 ("*Development of ODS Alloy for Heat Exchanger Tubing"* by I.G. Wright et al., Summary of Progress on Program WPN-FEAA058, Oak Ridge National Laboratory, Oak Ridge, TN, March 2003). This is attributed to the inherent coarse-grained microstructure associated with the alloy in the longitudinal direction and fine-grained microstructure in the circumferential direction. This difference in creep rupture life can be as much as an order of magnitude, depending on temperature, but it is commonly only 20% as strong in the circumferential direction.

The present invention solves this problem by providing a composite tube in which the stresses are borne by a strong heat-resistant outer shell and an inner core of corrosion resistant alloy MA956 suitable for the rigors of ethylene pyrolysis furnaces. These desired attributes are achieved at an advantageous cost relative to the benefits derived.

### SUMMARY OF THE INVENTION

The present invention provides a composite clad tube preferably consisting of an outer shell of a traditional wrought ethylene furnace tube alloy, such as INCOLOY® alloy 800HT, 803 or 890 and an inner layer of INCOLOY® alloy MA956. The composite clad tube is produced by co-extrusion of a fabricated billet utilizing INCOLOY® alloy MA956 powder in a canned type canister configuration within a trepanned (pierced) casting or forge billet of the shell alloy. The extruded composite shell is then preferably pilgered to a smooth-bore tube or, if desired, drawn to a finned or ribbed bore configuration, such as is described by England et al., in U.S. Patent No. 5,016,460 dated May 21, 1991. During tube manufacture, the INCOLOY® alloy MA956 is not given a final grain-coarsening anneal (defined as at least one hour at 1200°C or higher), in order to maintain the alloy in a fine grain, highly ductile condition. This innovative step is exploited so as to match the fabricability of the inner and outer shell materials, particularly during extrusion but also during pilgering. The finished tubing can be joined to itself or to dissimilar alloys in the manufacturing mill by such welding techniques as friction welding, magnetic pulse welding, explosive cladding or liquid phase bonding. Laser welding is also described in the literature ("*Welding of Mechanically Alloyed ODS Materials"* by T.J. Kelly and presented at the Fall ASM Conference in New Orleans, Louisiana, 1981) and a threaded joint design using an INCOLOY® alloy MA956 coupling has recently been described (U.S. Patent No. 6,514,631). For joining in the field, a root pass of an INCOLOY® alloy MA956 filler metal in conjunction with a filler metal such as INCONEL® alloy 617 or FM 25/35, for joining the outer shell solves the field joining problem according to the present invention.

### BRIEF DESCRIPTION OF THE DRAWINGS

FIG. 1 is a top end view of a partially constructed extrusion canister for forming a composite billet according to the present invention;

FIG. 2 is a cross-sectional view of the partially constructed extrusion canister taken along section line 2-2 of Fig. 1;

FIG. 3 is a plan view of a steel plate used to seal the top of the extrusion canister of Fig. 2;

FIG. 4 is a fragmented view of the extrusion canister similar to Fig. 2, but with the metal powder in place, and with the steel plate of Fig. 3 welded to the top thereto;

FIG. 5 is an end view of a co-extruded composite shell according to the invention prior to pilgering or drawing;

FIG. 6 is a cross-sectional view of the composite shell taken along section line 6―6 of Fig. 5;

FIG. 7 is an end view of a pilgered composite tube according to the present invention;

FIG. 8 is a cross-sectional view of the pilgered composite tube taken along section line 8―8 of Fig. 7; and

FIG. 9 is an enlarged end view of a drawn composite tube of the present invention having a finned or ribbed bore.

### DETAILED DESCRIPTION OF THE INVENTION

INCOLOY® alloy MA956 is well-known for its excellent high temperature oxidation, carburization and sulfidation resistant properties that are achieved by the development of an alumina (Al₂O₃) scale on the alloy even in environments of very low partial pressures of oxygen ("*High Temperature Corrosion Resistance of Heat Resistant Mechanically Alloyed Products*" by G.D. Smith and P. Ganesan, presented at the conference Structural Applications of Mechanical Alloying, Myrtle Beach, SC, March 27-29, 1990). A recent study has shown this alloy to exhibit excellent coking resistance when exposed to ethylene pyrolysis atmospheres and confirmed that furnace operators can extend their run time between expensive and degrading decoking cycles and thereby extend the life of the operation tubes ("*Application of New Ethylene Furnace Tube Oxide Dispersion Strengthened* *(ODS) Alloy"* by Hosoya et al., presented at the 13^{th} Ethylene Forum, February 20-23, 2001, Baton Rouge, LA.) Typical wrought or cast alloys that contain sufficient aluminum to form alumina scales are very poor in high temperature strength and creep rupture properties due to the aluminum content. In some cases, these alloys exhibit very poor scale adhesion due to coefficient of expansion mismatch between the alumina scale and the substrate alloy. This problem is minimized in INCOLOY® alloy MA956 due to its relatively low coefficient of expansion somewhat similar to that of the alumina and the fact that the yttria (Y₂O₃) content aids scale adhesion by increasing adhesion at the scale/substrate interface. A composite tube according to the present invention that utilizes INCOLOY® alloy MA956 internally while employing an outer shell of a conventional wrought ethylene tube alloy, such as INCOLOY® alloys 800HT, 803 or 890, overcomes a significant impediment to the use of INCOLOY® alloy MA956, namely, the high cost of producing tubing using mechanically alloyed INCOLOY® alloy MA956. The thin inside layer of INCOLOY® alloy MA956 is used for its carburization and coke resistant properties, and the outer shell of a heat resistant Fe-Ni-Cr alloy is employed to add overall strength and rigidity to the tube.

The nominal composition of INCOLOY® alloy MA956 is 20% Cr, 4.5% Al, 0.5% Ti, 0.5% Y₂O₃, balance Fe. Thus, the alloy is a ferritic, solid solution alloy which derives its elevated temperature strength from a fine oxide dispersion of Y₂O₃ which inhibits slip creep and allows for the formation of a very coarse-grained microstructure. As a result of the alumina scale formation for nearly all high-temperature environments, the alloy is exceptionally corrosion resistant. Few engineering alloys match the overall high temperature corrosion performance of INCOLOY® alloy MA956.

The alloy MA956 powder is produced by a powder metallurgical process termed mechanical alloying ("MA") (J.S. Benjamin, Met. Trans., Vol. 1, p. 2943 (1970)). Fe and Fe-Cr-Al-Ti master alloy powders of less than 150 microns particle size are blended with Y₂O₃ powders of approximately 20-40 microns and then processed under carefully controlled conditions in a high energy attritor or dry ball mill. During the milling, the powder particles are welded, work-hardened and fractured repeatedly until the charge is made homogeneous. At the end of the mechanical alloying process, each particle is chemically uniform and contains a fine dispersion of Y₂O₃. Details of the powder production if INCOLOY® alloy MA956 can be found in U.S. Patent No. 3,992,161 to Cairns et al, the contents of which are incorporated by reference herein. The mechanically alloyed powder is then ready for use in making a composite tube according to the present invention.

### Description of Tube Production

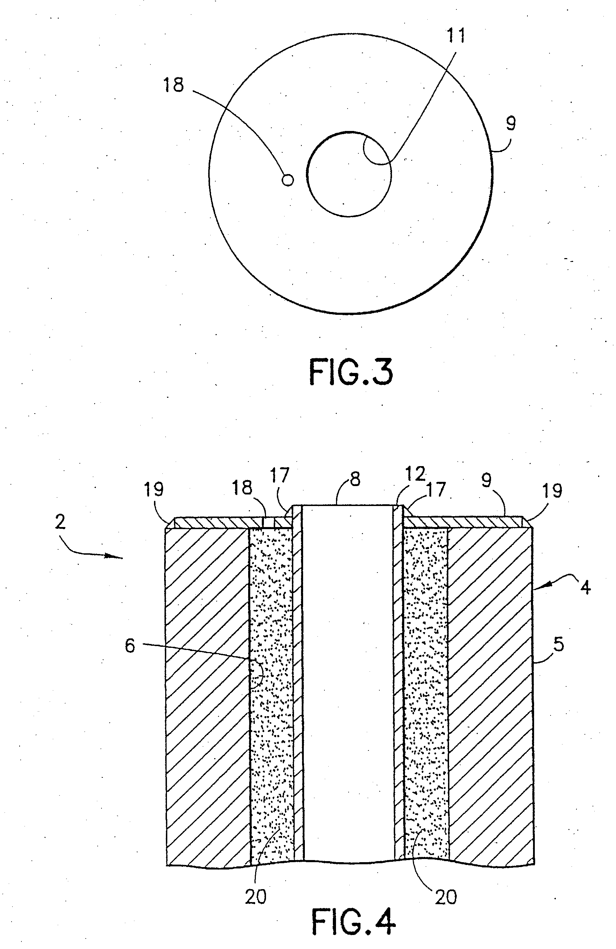

Initially, a composite billet in the form of an extrusion canister 2 is prepared for extrusion. The extrusion canister 2 is depicted in Figs. 2 and 4. The outer shell 4 is typically made from large diameter alloy bar that has been Argon-Oxygen-Decarburized (AOD) plus Electro-Slag-Remelted (ESR) cast, forged to shape, and annealed. Cast-to-shape ingots may be substituted in certain cases. The alloy material for the outer shell 4 is preferably selected from one of the Fe-Ni-Cr heat resistant alloys, INCOLOY® alloys 800HT, 803 or 890, although other high temperature heat-resistant wrought alloys may be used for specific applications such as HPM, 353MR and HR-120. All of these heat resistant wrought or cast alloys and like alloys, which are suitable for use as a material for the outer shell 4, are referred to collectively as an "Fe-Ni-Cr heat resistant alloy" herein.

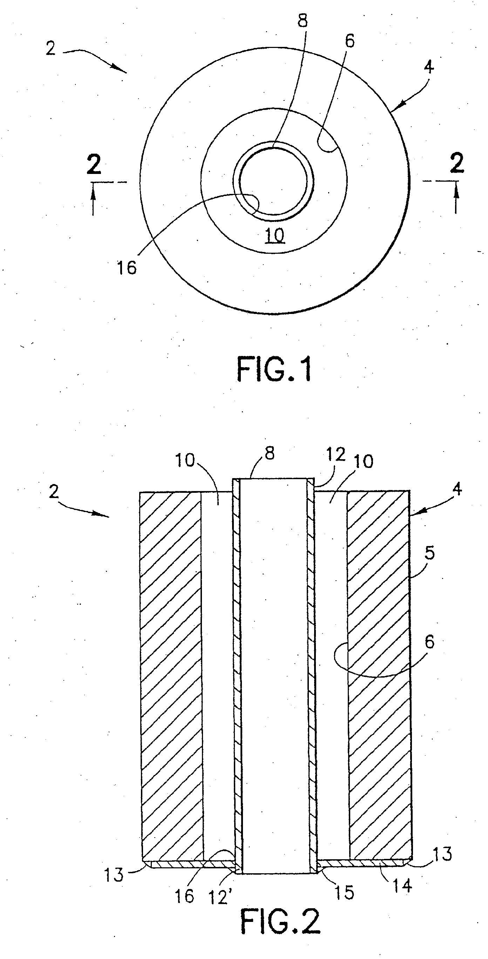

The outer shell 4 is machined to provide a desired outside diameter 5 sized to fit the extrusion press container, and the center of the shell 4 is trepanned (pierced) to a dimension at inside diameter 6 to allow for the placement of INCOLOY® alloy MA956 inner core powder to within the annular space 10 shown in Figs. 1 and 2. The inner dimension of the canister 2 defined by the diameter of steel tube 8 is sized to coincide with the extrusion press mandrel diameter.

As shown in Fig. 2, the extrusion canister 2 is prepared by attaching a circular bottom plate 14 of steel to the bottom of the outer shell 4 by way of a weld bead 13. The steel pipe 8 is, likewise, attached to the bottom steel plate 14 by way of a weld bead 15. The pipe 8 may have an extended end portion 12' which protrudes through a hole 16 formed in the center of the bottom plate 14 for easier welding at bead 15. The outer shell 4 defines the annular space or cavity 10 between its inner diameter 6 and the pipe 8 into which the alloy MA956 powder is placed, as shown in Fig. 4. A top cover plate 9, also of steel, shown in Figs. 3 and 4, is attached to the top of the outer shell 4 after placement of the metal powder 20 to complete the construction of canister 2. The cover plate 9 has a central hole 11 formed therein which fits over the extended end 12 of pipe 8 and is attached to the pipe 8 by way of weld bead 17 and to the outer shell 4 by way of a weld bead 19. The top cover plate 9 has a vent hole 18 formed therethrough which is connected to a vacuum pump (not shown) to evacuate the oxygen-containing atmosphere within the cavity 10 and degas the metal powder 20 therein.

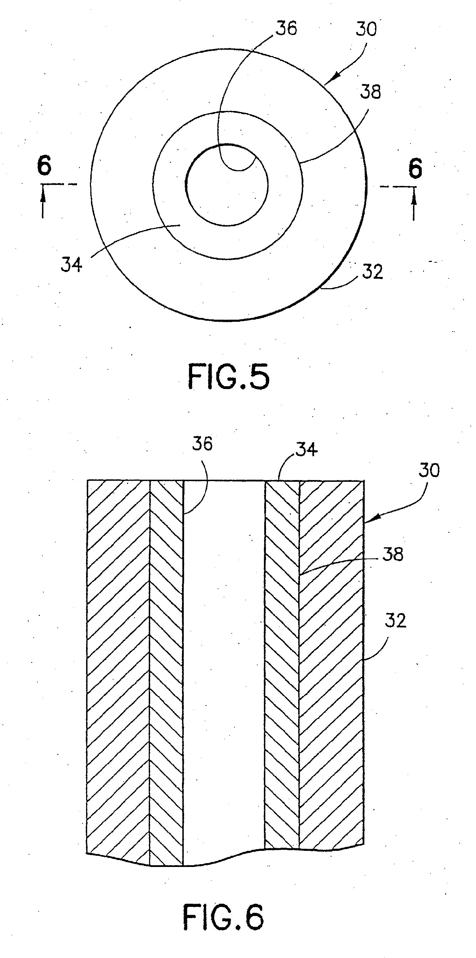

The extrusion canister 2 is then heated to extrusion temperature, such as 1177°C, lubricated with glass on both the inner diameter of tube 8 and outer surface 5 of shell 4, and extruded over a mandrel at a controlled rate, usually between 10 and 77mm/sec to produce an extruded composite tube shell 30, shown in Figs. 5 and 6. The composite tube shells 30 are then deglassed, pickled, trimmed to remove extrusion defects at the nose and tail, straightened and checked by ultrasonic testing for integrity of the bond between inner and outer shells. The details concerning the preparation of the extrusion canister 2 are more fully described below.

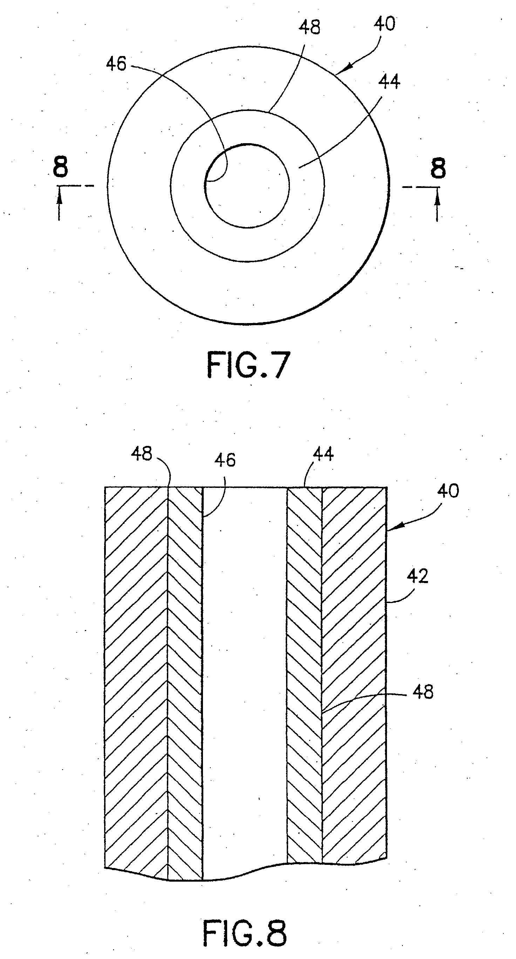

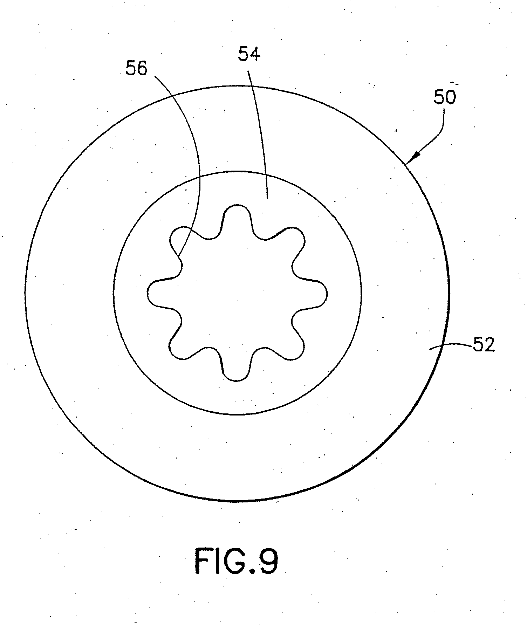

After some spot grinding and reaming, the extruded composite shells 30 are tube reduced on a standard Pilger mill, usually in two passes of between 40 and 60% reduction per pass with an intermediate anneal between passes to produce a composite tube 40 of desired size as shown in Figs. 7 and 8. Up to this stage of processing, the INCOLOY® alloy MA956 has not been exposed to a time and temperature sufficient for recrystallization to a coarse-grained microstructure. The maintenance of a fine-grained microstructure aids in fabrication because the ductility of the alloy MA956 is maximized by its fine-grained condition. The extruded shell 30 may be drawn in lieu of pilgering and the final pass may be a finning pass as described in U.S. Patent No. 5,016,460 to England et al., the disclosure of which is incorporated by reference herein. The fins or ribs 56 are formed on the inside bore of the composite tube 50 as depicted in Fig. 9 in order to increase the surface area of the bore and, thus, increase process efficiency.

Because INCOLOY® alloy MA956 is a ferritic stainless steel, it exhibits a conventional ductile-to-brittle transition at temperatures between 0°C and 70°C, depending upon product form, exact composition and stress state. This is particularly important in field fabrication and the material generally requires warming the composite tubes 40 or 50 to at least 80°C before field tube bending or welding. For application as ethylene pyrolysis tubing, it is not necessary to anneal the INCOLOY® alloy MA956 to its typically used coarse-grained microstructure, since the longitudinal and circumferential stress is borne by the stronger outer shell alloy. In fact, it is generally believed that the fine-grained microstructure of the INCOLOY® alloy MA956 may actually enhance high temperature corrosion resistance. However, to optimize the mechanical properties of the outer shell conventional wrought alloy, a standard solution anneal is given the composite tube, the conditions depending on the actual outer shell alloy employed. A typical solution anneal is conducted at about 1189 °C for 10 min. The final anneal additionally develops the alumina scale on the INCOLOY® alloy MA956 which is an aid to allowing the tube to be conditioned for ethylene service upon installation within a pyrolysis furnace.

### Laboratory Examples

Four laboratory size composite tubes, designated 40 in Figs. 7 and 8, were made to demonstrate the manufacturing process of the present invention and to confirm sound bond integrity at the interface 48 between the outer shell 42 comprising the conventional wrought alloy and the INCOLOY® alloy MA956 of the inner core 44. With reference to Figs. 1-4, two of the outer shells 4 of INCOLOY® alloy 803, nominal composition, 25.6% Cr, 34.6% Fe, 0.5% Al, 0.5% Ti, 0.9% Mn, 0.7% Si, 0.2% Mo, 0.07% C, 0.001% B, balance Ni were prepared. This alloy was cast as about 115mm diameter ingots and homogenized at 1177°C for 24 hours. The shell ingots 4 were then machined to an outer diameter 5 of 88.65mm and bored to an inner diameter 6 of 41.28mm. The length of the machined outer shell 4 was approximately 300mm. Using this outer shell 4, a ¼ inch thick bottom plate 14 with an inner diameter 16 of 25.53 mm and an outer diameter 5 of 85.73 mm was welded to the bottom of the shell ingot 4. The carbon steel tube 8 of 25.4mm outer diameter and wall of 3.175mm was inserted into the cavity defined by inner diameter 6 of the shell ingot 4 and also welded to the bottom plate 14. The annular cavity 10 was then filled with mechanically alloyed INCOLOY® alloy MA956 powder and a top plate 9 of similar dimensions as that of the bottom plate 14 was welded to the shell ingot 4 and to the steel tube 8. A ¼ inch diameter vent hole 18 was previously drilled in the top plate 9 over the annular cavity 10, allowing for a tube (not shown) to be inserted in hole 18 and welded in place. A hose (not shown) was attached to the tube and a vacuum pump (not shown) attached to the tube. The annular cavity 10 containing the alloy MA956 powder was then deglassed, the tube sealed off, and the so-fabricated billet in the form of an extrusion canister 2 was ready for extrusion.

The vacuum degassing step is important so that the alloy MA956 powder does not oxidize during the extrusion preheat and also to prevent pressure build-up during preheating which could otherwise cause a weld rupture in the weld beads 13 15, 17 or 19. Extrusion was accomplished by preheating the extrusion canister 2 to 1177°C for two hours and then extruding over a 12.2mm mandrel through a 38.1mm die. The outer diameter of shell 32 was then machined smooth and the inner diameter 36 was reamed to 15.88mm.

The resultant extruded composites 30 shown in Figs 5 and 6 were found to be essentially uniformly bonded at the interface 38 between the outer shell 32 and inner core 34 of extruded (now solid) alloy MA956 metal, as determined by ultrasonic testing.

Similarly, two outer shells 4 of INCOLOY® alloy 890, nominal composition, 25.0% Cr, 26.0% Fe, 0.1% Al, 0.45% Ti, 0.3% Mn, 2.0% Si, 1.5% Mo, 0.2% Ta, 0.08% C, 0.003% B, balance Ni, were cast and processed as above with the same results, that is, with sound bonding along the interface 38 between the core 34 and outer shell 32.

Sections from the INCOLOY® alloy MA956/INCOLOY® alloy 803 composite tubing 30 of the first described example were used to determine the growth kinetics of the austenitic transformation zone 38 that develops within the composite tube over time when exposed to high temperature typical of that which might be expected in ethylene pyrolysis service. Samples were exposed at 900°C, 1000°C and 1100°C for 24, 48 and 98 hours with an additional sample exposed for 710 hours at 1100°C. The samples were subsequently metallographically mounted and the width of the austenitic transformation zone at interface 38 was determined optically. The data are reported in the Table below as thickness vs. the square root of time. An equation was derived for the growth of the austenitic transformation zone at each temperature based on this data.

Plotting the width of the diffusion zone data as In kₚ vs. 1/T (K⁻¹), where kₚ = kₚ^{o} exp(-Q/RT) gives one an equation from which one may calculate an activation energy of the diffusion process as Q = 29,964 cal/K mol.

**TABLE**

| Prediction of Austenitic Transformation Zone Thickness That Will Develop In An INCOLOY® alloy MA956/INCOLOY® alloy 803 Co-extruded Tube Operating at 900°C, 1000°C and 1100°C | | | |
|---|---|---|---|
| Exposure Time (hrs) | Calculated Thickness of Austenitic Transformation Zone for Given Temperature (mm) | | |
| | 900°C | 1000°C | 1100°C |
| 1,000 | 0.007 | 0.192 | 0.424 |
| 10,000 | 0.208 | 0.609 | 1.327 |
| 20,000 | 0.292 | 0.863 | 1.873 |
| 50,000 | 0.459 | 1.363 | 2.959 |
| 100,000 | 0.647 | 1.926 | 4.180 |

The data reported in the Table indicates that nickel diffuses into the MA956 at a parabolic rate resulting in transformation of the ferritic matrix to a more ductile austenite.

### Commercial Examples

Using the information developed from the above laboratory works, a scale-up to commercial size tubing was undertaken. For this purpose, two forged and annealed large rod sections 622mm in length of INCOLOY® alloy 803 were machined to 270.5mm diameter and trepanned to an inner diameter of 140mm. As described above, an extrusion canister 2 was constructed wherein a 6.35mm thick bottom plate 14 of carbon steel with an outer dimension of 270.5mm and an inner hole 16 diameter of 121mm was welded to the billets 4 at weld bead 13, The carbon steel tube 8 slightly longer than 620mm in length (shown by extended portions 12 and 12' in Fig. 2) with an inner diameter of 108mm and an outer diameter of 121mm, was inserted into the bore 6 of the outer shell 4 and seal welded at bead 15 to the bottom plate 14. The annular cavity 10 between the steel tube 8 and the inner diameter 6 of outer shell 4 was then filled with INCOLOY® alloy MA956 powder. A top plate 9 of similar dimensions to that of the bottom plate 14 was then attachably sealed to the shell 4 and to the tube 8 by way of weld beads 19 and 17, respectively. The top plate 9 had a machined hole 18 of about ¼ inch diameter into which a tube (not shown) was inserted and seal welded into place. The tube was connected via a hose to a vacuum pump (not shown) and the alloy MA956 metal powder in cavity 10 was degassed under vacuum and the tube crimped off to seal the annular cavity 10. The composite billets formed by the canister 2 were then ready for extrusion. The billets defined by the extrusion canister 2 were heated to 1190°C for approximately three hours and extruded over a 108mm diameter mandrel through a 133mm diameter tapered die at about 51mm/second (the extrusion ratio was 9).

The extruded composite tubes 30 so produced were approximately 4.6 meters in length which were subsequently front and back end cropped, deglassed and pickled. Acid pickling is usually necessary in order to remove the remnants of the steel components which remain on the extruded composite tubes. The extruded inner INCOLOY® alloy MA956 forming the inner core 34 was approximately 0.94mm in thickness and the INCOLOY® alloy 803 extruded outer shell portion 32 was measured at 11.12mm in thickness. Dimensional measurements were consistent around the circumference of the extruded composite tubes 30. The tubes 30 were spot ground, followed by centerless grinding to a smooth finish and pickled again to remove remnants of the inner liner steel tube 8. The composite tubes 30 were then ultrasonic tested and found free of any debonding between the inner and outer shells 34 and 32, respectively, at interface 38. One tube 30 was held at this point and the second tube 30 was pilgered to 108mm outer diameter by 93.8mm inner diameter, roughly a 50% reduction in area forming a smooth bore composite tube 40 depicted in Figs. 7 and 8. The INCOLOY® alloy MA956 inner core 44 was essentially unchanged at 0.9mm thickness and the INCOLOY® alloy 803 outer shell casing 42 was about 6.7mm thickness. The tube 40 was Medart straightened and samples cut for welding trials and thermal fatigue testing to demonstrate bond integrity under service conditions. After pilgering reduction, the inner bore 46 of the tube 40 retained a smooth sidewall.

In order to demonstrate a satisfactory field welding procedure, several 204mm lengths of the as-extruded composite tubing 30 were welded using the following practice. The sections to be joined were pre-weld heated at 205°C for four hours to eliminate any residual hydrogen pickup due to pickling. The initial four root passes to join the inner cores 34 were made with filler metal alloy MA956 wire (2.36mm diameter) and the subsequent weld passes made with 2.36mm diameter INCONEL® alloy filler metal alloy 617 to join the outer shell casings 32. Hence, it will be appreciated that two different weld filler metals are employed so as to be compatible with the different alloys in the core 34 and shell 32. The completed weld was then post-weld heat treated again at 205°C for four hours. The general welding parameters used were 190 amperes at 15.5 volts using a shielding gas of pure argon at 25 cfh. The torch electrode was 2% thoriated tungsten 3.175mm diameter. The weld was x-rayed and found to be crack-free. A second tube weld, joining two lengths of extruded tubes 30, was made for the purpose of thermal fatigue testing.

In an effort to demonstrate the necessary thermal fatigue resistance required of a radiant tube in an ethylene pyrolysis furnace over the projected lifetime of a composite tube, a test was devised that initially aged a 64mm length of circumferentially welded tubing, as described above, plus a 64mm length of composite tube at 1100°C for 100 hours. Inspection showed the tubing to be fully bonded and the weld crack-free. The two test rings were then thermal cycled from 1100°C to approximately 300°C using a 20 minute hold at 1100°C followed by a 10-minute cycle in air to approximately 300°C. The test was conducted for 200 cycles, after which inspection of the extruded composite tube 30 metallographically showed the bond at interface 38 between the INCOLOY® alloy MA956 inner core layer 34 and the outer shell portion 32 of INCOLOY® alloy 803 to be sound and exhibiting barely measurable diffusion of aluminum at the interface 38 in the direction of the INCOLOY® alloy 803 in the outer shell portion 32.

As mentioned hereinabove, the extruded tube 30 is either pilgered to produce a composite tube 40 of desired O.D. and I.D. having a smooth bore 46 along the core 44, or the extruded tube 30 can be drawn using a formed mandrel to produce a tube 50 depicted in Fig. 9 having ribs or fins 56 formed along the bore of the inner core layer 54. Inner core layer 54 is integrally bonded to the outer shell portion 52 by the extrusion step, as previously described.

While specific embodiments of the invention have been described in detail, it will be appreciated by those skilled in the art that various modifications and alternatives to those details could be developed in light of the overall teachings of the disclosure. The presently preferred embodiments described herein are meant to be illustrative only and not limiting as to the scope of the invention which is to be given the full breadth of the appended claims and any and all equivalents thereof.

This specification mentions various commercial alloys; their general compositions (in % by weight) can be derived from the literature. The most important are set out below:

| | **MA956** | **890#** | **800HT** | **803** | **HK40** |
|---|---|---|---|---|---|
| **Fe** | Balance* | Balance* | at least 39.5 | Balance* | Balance* |
| **Ni** | Up to 0.5 | 42.5 | 30-35 | 32-37 | 19-22 |
| **Cr** | 18.5-21.5 | 25 | 19-23 | 25-29 | 23-27 |
| **Al** | 3.75-5.75 | 0.1 | 0.25-0.6** | 0.15-0.6 | |
| **Ti** | 0.2-0.6 | Up to 1 | 0.25-0.6** | 0.15-0.6 | |
| **C** | Up to 0.1 | 0.1 | 0.06-0.1 | 0.06-0.1 | 0.35-.0.45 |
| **Yttrium Oxide** | 0.3-0.7 | | | | |
| **Cu** | Up to 0.15 | Up to 0.75 | | Up to 0.75 | |
| **Mn** | Up to 0.3 | Up to 1 | | Up to 1.5 | 0.4-1.5 |
| **Nb** | | 0.4 | | | |
| **Ta** | | 0.2 | | | |
| **Co** | Up to 0.3 | | | | |
| **Mo** | | 1.5 | | | |
| **P** | Up to 0.02 | Up to 0.03 | | | Up to 0.03 |
| **Si** | | 1.8 | | Up to 1 | 0.5-1.5 |
| **S** | | Up to 0.015 | | Up to 0.015 | Up to 0.03 |

| | | | | | |
|---|---|---|---|---|---|
| * Balance apart from incidental elements and impurities | | | | | |
| ** Al+Ti=0.85-1.2 | | | | | |
| ^{#} This is a spot composition; a broader composition is given in US Patent 5873950 | | | | | |

## Claims

1. A composite tube suitable for ethylene pyrolysis furnaces and like service comprising an outer shell of a Fe-Ni-Cr heat resistant alloy, e.g. a high temperature heat-resistant alloy selected from the group consisting of alloys 800HT, 803, 890, HK40, HPM and modified HPM, and an inner core of alloy MA956.

2. The composite tube of claim 1, wherein the outer shell is made from a wrought Fe-Ni-Cr heat resistant alloy, e.g. an alloy selected from the group consisting of alloys 800HT, 803 and 890, and the inner core of alloy MA956 is made from a mechanically alloyed powder, wherein said outer shell and said inner core are simultaneously extruded.

3. The composite tube of claim 1, wherein said inner core has a smooth bore or a finned bore.

4. A process of making a composite tube suitable for use in ethylene pyrolysis furnaces and like service comprising the steps of:
(a) providing an outer shell of a Fe-Ni-Cr heat resistant alloy;
(b) providing a mechanically alloyed powder of alloy MA956;
(c) placing the alloy MA956 powder of step (b) around an inner diameter of said outer shell provided in step (a) to form an inner core, wherein the inner core has a bore formed therein;
(d) simultaneously extruding the outer shell and inner core to form an extruded composite tube shell; and
(e) cold working the composite tube shell to form the composite tube.

5. The process of claim 4, including the step of degassing the alloy powder under a vacuum after said placing step (c) and including the step of heating said outer shell and inner layer prior to said co-extruding step (d) to a temperature less than 1200°C and maintaining time and temperature to prevent recrystallization of said alloy MA956.

6. The process of claim 5, wherein the cold working step includes one of the steps of drawing, e.g. to produce a finned inner diameter, or pilgering.

7. The process of claim 5, wherein said alloy MA956 exhibits a coarse-grained microstructure and wherein said heating step is conducted at a temperature of 1177°C-1190°C and further wherein the process is conducted at times and temperatures less than 2000°C to prevent a recrystallization of coarse-grained microstructure of the alloy MA956 to a fine-grained microstructure.

8. A method of field fabricating ethylene pyrolysis furnace tubes comprising the steps of:
(a) providing composite tubes comprising an outer shell of a Fe-Ni-Cr alloy and an inner core of alloy MA956;
(b) heating the composite tubes to a temperature of at least 80°C;
(c) bending the heated composite tubes to a desired configuration to provide formed composite tubes; and
(d) joining the formed composite tubes by welding while said formed composite tubes are at a temperature the same as or in excess of the temperature of step (b), said welding step employed in one or more welding passes using a first weld filler metal compatible with the alloy of said inner core, e.g. filler metal MA956 alloy wire, and successive welding passes using a filler metal compatible with the alloy of said outer shell, e.g. filler metal 617 alloy wire.

9. The method of claim 8, wherein the composite tubes are heated to a temperature of approximately 205°C prior to said welding step and further includes post-weld heat treating the welded composite tubes at a temperature of approximately 205°C.

10. The method of claim 9, wherein the welding step employs a torch electrode of tungsten with an inert shielding gas of pure argon.

11. An extruded and cold worked composite tube having an outer shell of a wrought or cast alloy, e.g. a wrought Fe-Ni-Cr alloy such as one selected from the group consisting of alloys 800HT, 803 and 890, and an inner core of an oxide dispersion strengthened powder metal alloy, e.g. alloy MA956.

12. An ethylene pyrolysis furnace tube comprising an extruded and drawn composite tube having an outer shell of a Fe-Ni-Cr alloy, e.g. an alloy selected from the group consisting of alloys 800HT, 803, and 890, and an inner core of alloy MA956, the inner core optionally having a bore with a finned sidewall.

13. An ethylene pyrolysis furnace tube comprising an extruded and pilgered composite tube having an outer shell of a Fe-Ni-Cr alloy, e.g. an alloy selected from the group consisting of alloys 800HT, 803, and 890, and an inner core of alloy MA956.
